(19)

Europäisches
Patentamt
European
Patent Office
Office européen
des brevets

(11) **EP 4 280 752 A1**

(12) **EUROPEAN PATENT APPLICATION**

(43) Date of publication:
**22.11.2023 Bulletin 2023/47**

(21) Application number: **22174448.5**

(22) Date of filing: **19.05.2022**

(51) International Patent Classification (IPC):
**H04W 72/04** (2023.01)      **H04W 4/40** (2018.01)

(52) Cooperative Patent Classification (CPC):
**H04W 4/40; H04W 72/0453;** H04W 72/20

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Telit Cinterion Deutschland GmbH
81541 München (DE)**

(72) Inventors:
• **BREUER, Volker
16727 BOETZOW (DE)**
• **WEIHMEIER, Lars
14612 FALKENSEE (DE)**

(74) Representative: **Pearl Cohen Zedek Latzer Baratz
UK LLP
The Gridiron Building
One Pancras Square
London N1C 4AG (GB)**

(54) **SETUP OF A SECOND SIDELINK IN HIGH RANGE OF FREQUENCY**

(57) The present invention relates to a method to manage communication between a first and a second user devices, said both devices having a first sidelink preliminarily established in a first range of frequency, said method comprising the step to control the activation and deactivation of a second sidelink at a higher second range of frequency, said control using signaling on the first sidelink established with the second user device, said signaling including a resource indication relative to available frequency resources in the second range of frequency for the second sidelink to be opened.

FIG.1

EP 4 280 752 A1

**Description**

**FIELD OF THE INVENTION**

The present invention relates to a method to manage communication between a first and a second user devices.
The invention also pertains to a user device adapted to implement said method and to a base station enabling the implementation of the method of the invention.

**BACKGROUND OF THE INVENTION**

Sidelink usage is to be enhanced in next standard Releases supporting more rich environments and use cases. Accordingly, 3GPP has agreed to extend the sidelink operation also for unlicensed bands and bands in FR2 as defined in the standard. Those bands have in common that their frequency range is far higher. They accordingly suffer more from the increasing attenuation as depicted in frequency range FR1 as defined in the standard or the designated frequency band for C-V2X frequency band for sidelink.
Currently sidelinks are to be used to support new radio NR sidelink carrier aggregation CA operation based on LTE sidelink CA operation (applicable to RAN2, RAN1, RAN4) and to support only LTE sidelink CA features for NR, i.e., SL carrier (re-)selection, synchronization of aggregated carriers, handling the limited capability, power control for simultaneous sidelink TX, packet duplication.
Currently, specifications are limited to FR1 licensed spectrum. There is no specific enhancements of Release 17 regarding other sidelink features. Specifically support of sidelink on unlicensed spectrum for both mode 1 and mode 2 where Uu operates in mode 1 is limited to licensed spectrum only (thus in RAN1, RAN2, RAN4). No study focuses on FR1 unlicensed bands (n46 and n96/n102).
Regarding specified enhanced sidelink operation on FR2 licensed spectrum (i.e. in RAN1, RAN2, RAN4), it is currently limited to the support of sidelink beam management, including initial beam-pairing, beam maintenance, and beam failure recovery, by reusing existing sidelink CSI framework and reusing air interface Uu beam management concepts wherever possible. Also beam management in FR2 licensed spectrum considers sidelink unicast communication only.
In Release 17 the major focus of the work is on power saving i.e. when using band n47 or any other licensed band in mode 1 i.e. under the control of the network to have aligned DRX cycles.
Besides, for sidelink, four modes are in general defined, where mode 3 and mode 4 is considered for V2X. The cell size or the distance a V2X link can achieve decreases for increasing frequencies. In comparison to 900MHz, in the 5.9GHZ range, only ~15% of the normal distance at 900MHz can be reached. For V2X devices, the situation may even be more drastically unfavorable as such devices does not have a cell coverage, i.e. they do not have means to overcome the extreme attenuation at higher frequencies.
The achievable coverage of cells depends on frequency. In a C-V2X standalone, i.e. mode 4, bands already only 20% of a normal coverage in core bands would be achieved. Considering that sidelink is low in power, there is a strong decrease in coverage towards FR1 unlicensed bands above 6GHz and FR2 starting from 24GHZ. Thus only small distances, i.e. for example proximity around a car, can be considered for sensible sidelink setup attempt on higher frequencies.
V2X sidelink thus defined specifically two modes for UE to UE communication being different according to the resource allocation mode.
Mode 3 is under the control of the base station, i.e. when UEs are in coverage of a base station, the base station can take care of the resource poll and resource assignment for direct UE-to-UE communication. This requires at least one UE being in coverage of the base station.
Mode 4 is for UE autonomous resource selection. Its basic structure is based on a UE sensing, within a pre-configured resource pool, which resources are not in use by other UEs with higher-priority traffic and on choosing an appropriate amount of such resources for its own PSCCH/PSSCH transmission. Once such resources are selected, the UE can transmit in them on a periodic, i.e. on semi-persistent scheduling SPS, basis for a certain number of times, or until a cause of resource reselection is triggered.
None of the so far defined modes 3 and 4 as such are really promising for sidelink in FR2. Mode 3 works in conjunction with a base station covering said band i.e. supervising the sidelink. Mode 4 works with autonomous UEs and is based on a pre-provisioned resource pool i.e. in unlicensed band. Indeed coverage of cells in mode 3 is pretty small, hence coverage or partial coverage is seldom reached. For independent mode 4 considering FR2, allocation of resource will lead to extreme power consumption as running always on sidelink in FR2 could be quite power consuming.
Same consideration applies for FR1 sidelink CA, i.e. combining a licensed frequency being in mode 3, thus with base station resource assignment, and performing sidelink carrier aggregation, sidelink-CA, with a frequency of an unlicensed band. The main 5G unlicensed bands are in the range of 6GHZ and above, where coverage is already pretty small.

A hybrid-mechanism involving sidelink on several frequency bands is missing. More precisely, having a first sidelink in a lower frequency range being in licensed or unlicensed spectrum and a second sidelink in a higher frequency range, which can be upper FR1 or FR2, is not yet intended. Also, as seen above, to setup sidelink along with already existing FR1 sidelink in a licensed or unlicensed bands at 7GHZ is challenging.

Further alternative and advantageous solutions would, accordingly, be desirable in the art.

## SUMMARY OF THE INVENTION

The present invention aims in enabling parallel sidelinks to be established in different bands of frequency.

The present invention is defined, in its broadest sense, as a method to manage communication between a first and a second user devices, said both devices having a first sidelink preliminarily established in a first range of frequency, said method comprising the step to control the activation and deactivation of a second sidelink at a higher second range of frequency, said control using signaling on the first sidelink established with the second user device, said signaling including a resource indication relative to available frequency resources in the second range of frequency for the second sidelink to be opened.

The invention thus enables a hybrid sidelink mode where two parallel sidelinks are opened in two ranges of frequency. It consists in a method for sidelink carrier aggregation as meant in the standards, where a second sidelink is under control and supervised by a first sidelink, i.e. a hybrid type between mode 3 and mode 4. The first sidelink is typically supposed to exist in FR1 as a first range of frequency, the second range of frequency being in FR2 or in unlicensed FR1.

The invention enables to activate a second sidelink in a higher band of frequency when it makes sense and to allocate available resources. A frequency multiplexing is thus used which avoids tight time alignment. A carrier aggregation is possible from data as carried on the two sidelinks. With the invention the sidelink used for both are time aligned respecting the different frame/slot duration.

With the invention, both user devices are aware of the available frequency resource at higher frequency where to establish a second sidelink. It avoids a sidelink to be established in a frequency range where, for example, a neighboring base station is connected to one or the other of the user device.

Also, if ever involved, for example, base stations acting in FR1 also know which frequency part of FR2 is in use by FR2 base station and hence can assign remaining frequency bandwidth on demand to FR2 sidelink. The FR1 base station can then perform the resource allocation, once the FR2 sidelink is established.

In a preferred embodiment, the signaling further includes a quality indication relative to the quality of the first sidelink.

The activation or deactivation of the second sidelink is thus advantageously done in dependency of the first sidelink in addition to the received frequency resource indications.

According to an advantageous feature, the signaling further includes a state indication of a state machine comprising at least the following states: activate second sidelink in frequency included in resource indication, suspend second sidelink, resume second sidelink, terminate second sidelink.

Such a state machine enables to control the establishment and the maintenance or suspension or termination of the second sidelink. Requests corresponding to the state machine are thus carried by the first sidelink in the first range of frequency.

According to a feature of the invention, the method further comprises a step of broadcasting synchronization signals in the second range of frequency upon receiving reference signals on the first sidelink in the first range of frequency from the other user device in proximity above a certain first threshold.

This means that the second sidelink is only activated or activation is started for setting up the second sidelink in case that the first sidelink between the devices is measured above certain level sidelink is above a certain level,i.e. signal quality (RSCQ) or received reference signal power (RSCP) is above a certain threshold in the first sidelink.

Based on the exchanged signals on the first sidelink, the devices can estimate the path loss/distance which gives an indication of what would be the actual path loss impacting the second sidelink. In a more advanced calculation, also the antenna configuration for first and second sidelink and their respective frequencies are considered.

The path loss based on free-space loss between two devices with a certain antenna configuration on a first frequency can be used to calculate their calculation capability on a second frequency when the second frequency itself is different from the first frequency and the antenna configurations and respective transmit powers are known. Hence for the invention offers a power efficient solution, evaluating, based on FR1 measurements or communication experience, if it makes sense trying to start a communication session in a second frequency range.

Moreover this enables the two sidelinks to be synchronized or setup as soon as reference signals in the first range of frequency are above a certain threshold. The threshold in FR1 can be used to decide on the setup or resume of the second sidelink in second range of frequency or whether to stop such attempts for the time being at all, i.e. also for the first sidelink in first range of frequency being at a limit to break.

According to another feature of the invention, the second sidelink is suspended when second sidelink signal quality or reference is below a certain second threshold and is resumed when reference signals on the first sidelink in the first range of frequency is again above the first threshold.

This enables to manage the opening and the suspension of the second sidelink coming in support to the first one depending on the quality of the link in the two ranges of frequency. This last feature can be implemented in parallel with the previous one as the other features and advantageous characteristics of the invention.

According to an advantageous feature, the indication relative to available frequency resources is based on an evaluation of geographical positions of the two user devices relatively to local base stations acting in the second range of frequency.

Evaluating the geographical positions of the user devices is sufficient for the user devices to know if a base station is acting in the second range of frequency in their vicinity. It can be particularly adapted in case of a first sidelink in mode 4. In mode 3, this evaluation is also interesting as it complements the frequency resource information relative to the activity in some bandwidth parts of the local base stations. It is however noted here that the invention may be implemented also when said FR2 range is not used by any base station in the vicinity. In such a case, the two user devices are autonomous for the establishment of the sidelink in FR2, but still interacting with a first base station acting in FR1, if FR1 is a licensed band and also used by a base stations.

According to a specific feature, the method further includes the step, for the first user device, to receive the resource indication via an air interface with a first base station with which it has a connection in the first frequency range.

Such a step enables the first user device to be aware in a very simple way of the available frequency resource in the second range of frequency.

Advantageously, the resource indication is a frequency band or frequency chunk indicated to be usable for a second sidelink by the user device within the entire coverage area of the emitting first base station.

This enables to defined a second range of frequency in an unlicensed band for example but still in FR1 for example.

According to an advantageous feature, the first sidelink carriers at least a part of the control information for data transmitted over the second sidelink.

Typically such control information are ACK/NACK messages or format indication. Such a feature enables to use the first sidelink, which is potentially the most overloaded, for the lighter part of the necessary data, i.e. the control data for another link, the second sidelink, that will transmit the largest part of the data.

The present invention also relates to a user device adapted to:

- act in at least two ranges of frequency,
- establish a first sidelink in a first range of frequency with a second user device,
- control the activation and deactivation of a second sidelink at a higher second range of frequency, by signaling on the first sidelink established with the second user device, said signaling including a resource indication relative to available frequency resources in the second range of frequency for the second sidelink to be opened.

Such a user device is adapted to implement a method of the invention by establishing a second sidelink in a second range of frequency using signaling on a first sidelink in first range of frequency.

In addition to other features of the method of the invention, the user device is in particular adapted to broadcast synchronization signals in second range of frequency upon receiving reference signals in the first range of frequency from another user device in proximity above a certain threshold.

It is also further advantageously that the user device comprises a geographical evaluation module adapted to perform itself evaluation of geographical positions of the two user devices relatively to local base stations acting in the second range of frequency. In such a case, advantageously, the indication relative to available frequency resources is based on an evaluation of geographical positions of the two user devices relatively to local base stations acting in the second range of frequency. This feature could later be claimed as such for the user device itself.

According to an advantageous feature, the user device is configured to receive the resource indication via an air interface with a first base station with which it has a connection in the first frequency range.

In parallel to this last advantageous feature, the invention thus at last relates to a base station adapted to:

- act in at least one first range of frequency adapted,
- to connect to a first user device in a first range of frequency and,
- to connect to a second base station acting in a second range of frequency higher than the first range of frequency,

said base station being further configured to

- gather information on bandwidth parts in the second range of frequency used by the second base station,
- determine available frequency resource in the second range of frequency,
- send resource indication relative to available frequency resources in the second range of frequency to the first user device.

Such a base station supports the implementation of the invention in case of a mode 3 sidelink in the first range of frequency.

To the accomplishment of the foregoing and related ends, one or more embodiments comprise the features hereinafter fully described and particularly pointed out in the claims.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 represents an environment where the invention is implemented;
- Figure 2 schematically shows a state machine of the invention;
- Figure 3 shows a time flowchart of the method of the invention.

## DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

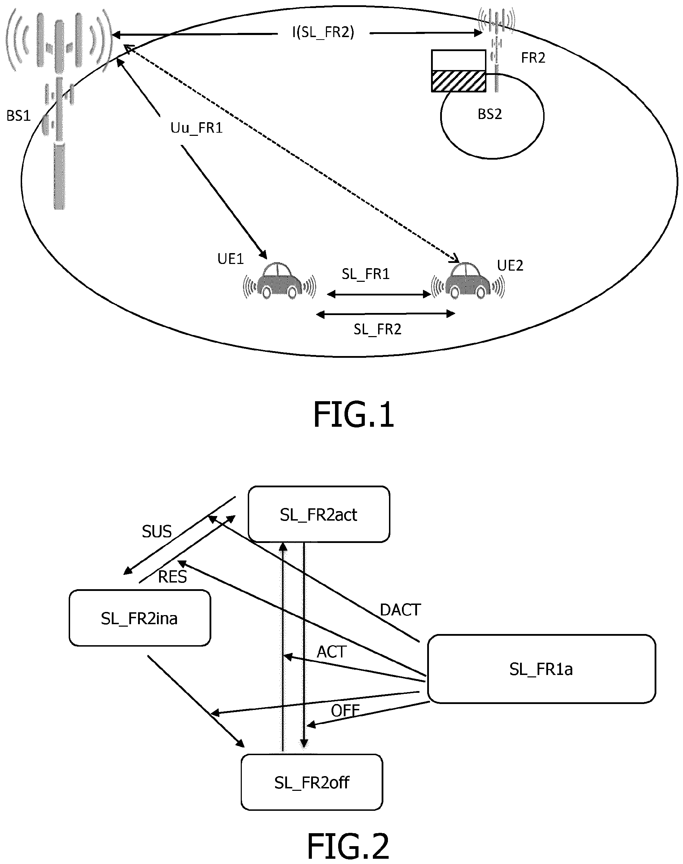

Figure 1 schematically shows an environment where the invention is implemented. A first base station BS1 acts in a first range of frequency FR1. This base station BS1 is connected to at least a first user device UE1. A second base station in a second range of frequency FR2 in the vicinity of at least one second user device UE2. In the invention, the base station BS2 does not need to be connected to any one of the two user devices UE1 or UE2.

It is however necessary that the first user device UE2 at least is aware of at least one available second range of frequency. This can be that the second base station BS2 keeps the first base station BS1 aware of such an available range of frequency and that the first base station BS1 has sent this information to the first user device UE1 previously to the triggering of the method of the invention.

A first sidelink SL_FR1 at a lower frequency FR1 is preliminarily established between first and second user equiments UE1 and UE2. With the invention, the first sidelink SL_FR1 controls the activation and deactivation of a second sidelink SL_FR2 at a higher frequency. The second sidelink SL_FR2 may exist in licensed or unlicensed band.

On the advantageous implementation shown on figure 1, the sidelink in the first range of frequency is in mode 3, thus controlled by the network via an air interface Uu FR1. It enables the resource pool for FR1 and FR2 sidelink to be indicated.

In particular the second base station BS2 spares in its coverage area a certain bandwidth part. Hence that bandwidth part can be allocated by the first base station BS1 for usage in sidelink CA for second sidelink in FR2. Hence even when the UE enters coverage area of BS2, the usage of the resources for FR2 will not lead to an allocation clash.

Thus, on figure 1, a sidelink carrier aggregation is effective between two licensed bands, where resource pool for first and second sidelink is indicated by the first base station BS1 as far as a mode 3 is active or was active. Thus advantageously, indication is done via air Uu interface considering the occupancy information received from the second base station BS2 on its bandwidth allocation information. Also, in case of positioning control included via the sidelink in the first range of frequency, also entire second range of frequency could be used as long as being sufficiently distant from side coverage area.

As illustrated on figure 2, controlling the second sidelink SL_FR2 means providing information related to the resource availability and thus resource control and providing information on activation or deactivation, i.e. suspend and resume or DRX. This control is performed using an active sidelink SL_FR1a in the first range of frequency.

The invention also relates to a state machine comprising the different states for the second sidelink SL_FR2.

It includes a sidelink radio resource control inactive state SL_FR2ina, i.e. the second sidelink is set to inactive by another first sidelink SL_FR1, a sidelink active state SL_FR2act and a sidelink off-state SL_FR2off. Thus the active first sidelink SL_FR1a implements a sidelink control machine.

The requests that can be made are desactivate DACT, activate ACT and stop OFF the second sidelink SL_FR2.

A second sidelink SL_FR2 which is momentarily not used between two devices having yet another first sidelink may thus be set to inactive SL_FR2ina. with a request DACT. These last states could be named RRC_Sidelink_inactive for Radio Source Control for sidelink inactive or SLC_Inactive for Sidelink Control inactive. It enables that the general context of said second sidelink SL_FR2 remains in the UEs but the air interface of said second sidelink SL_FR2 is currently not used. The invention thus proposes a sidelink state control machine involving a first and a second sidelink SL_FR2. The first sidelink SL_FR1 is always on during related state changes of the second sidelink SL_FR2. The first sidelink SL_FR1 may be in DRX/eDRX while second sidelink SL_FR2 is OFF or inactive.

The decision to momentarily deactivate (RRC_sidelink_inactive) the second sidelink is advantageously based on one of the following criteria:

- amount of data to be transmitted/waiting in the queue,
- resource allocation,
- measured performance of the first sidelink.

In the context of the invention, resource control of the second sidelink includes activation and deactivation of the second sidelink itself, activities related to BCH-emission and sensing indications for resource allocation in case the first sidelink SL_FR1 is operated in mode 3, i.e. under the control of a base station.

The activation/reactivation of second sidelink is thus advantageously based on performance of first sidelink. Performance can be a measured signal strength or traffic success criteria. In a less original way, the suspension of the second sidelink can be based on achievable throughput or signal strength on said second sidelink itself, i.e. increasing distance means increasing attenuation.

According to the common knowledge, both sidelinks need the start of certain subframes to be synchronized. The activation and deactivation indication will be based on System Frame Number SFNs of the first maintained sidelink.

The Subcarrier Spacing (SCS) on sidelink can be 15, 30, 60 in FR1 and 120 or 240 kHz or even 480kHz on FR2 or higher frequencies and slot duration accordingly 1ms/500us/... i.e. divided by $2^x$, i.e. being multiple of 2 of each other.

Indeed, the sidelink used for both frequencies are time aligned respecting the different frame/slot duration. More precisely, in FR1, a general subcarrier spacing (SCS) of 15kHz (like in LTE) or 30kHz or even 60kHz may be defined. In case of 15kHz, the slot duration is 1ms and in case of 30kHz it is only 500us and in case of 60kHz only 250us. It means that time is exchanged by frequency, leading to the same square of frequency versus time. Such flexible layer 1 also exists for FR2 where SCS may be of 120 or 240kHz. This leads to slot durations of 125us or 62,5us respectively. When combining FR1 and FR2 sidelink they have a different slot duration but it is a multiple of each other. Hence combining a sidelink in FR1 with 30kHz subcarrier spacing and a sidelink in FR2 with 120kHz subcarrier spacing should start at the same time. In general a frame consists of 10 slots, for which the same equation and relation applies concerning duration. Thus in parallel to FR1 subframe 0 there would be the subframes 0 to 3 in FR2. In parallel to FR1 subframe 1 there would be FR2 subframes 4 to 7. Thus, in general, to FR1 SFN X there would be the SFN 4 times x to 4 times x +3. It thus means starting would always be accordingly time aligned and after SFN role-over of SFN in FR2 there would be a hyper-count of 0 to 3 starting.

Hence, from FR1 perspective, there is always a corresponding FR2 starting slot. A synchronization point calculated according to above boundary can be used with respect to performing setup resuming or suspension of the corresponding second sidelink with respect to a certain timing of the first sidelink.

With the invention, in case of first sidelink is operated in mode 3, thus under network control, the resource control of the second sidelink is advantageously done in dependence of the first sidelink.

The first user device UE1, which is besides connected to the first base station BS1 via an air interface, has advantageously previously received resource allocation indications I(SL_FR2). For this purpose, exchanges between the first base station BS1 acting in the first range of frequency and the second base station BS2 acting in the second range of frequency besides occurred. It enables the first base station BS1 to get general FR2 allocation information of the local base stations deployed in the second range of frequency.

The FR1 sidelink band can either exist in the designated sidelink band without network supervision or in any other band with network supervision. So a sidelink in FR1 may always exist and indicating there capability to setup additional sidelink in FR2 frequency bands or unlicensed bands may also be used for extreme data exchange between the devices themselves.

According to the invention applied in a mode 3 context, the first device UE1 is provided with the indication via the Uu interface in which frequency band FR2 a second sidelink may be opened in addition to a first sidelink established in FR1 with a second user device UE2. More specifically, the indication gives in which frequency bandwidth part, i.e. frequency range not used by FR2 base stations in said area.

In a more advanced case, also the entire second range of frequency could be used, when positioning information of the involved devices is considered in addition. Indeed, as long as the two user devices are sufficiently distant from the BS2 deployment area, the entire second frequency range could be used. The indication as provided to the first UE1 can thus be related to such distances with base stations acting in second range of frequency.

The invention thus also concerns a dependency of the used FR2 bandwidth part for the second sidelink, which depends on the UE position relative to the second base station BS2 position evaluated via or in BS1.

When in addition a mode 3 is activated, the invention enables using the indication relative to the available range of frequency to increase the bandwidth part in FR2, or to reduce it when the devices are in proximity of an FR2 base station BS2 deployment to the unused bandwidth part of said second base station BS2 in FR2.

Depending on the load in the network and its distribution, the bandwidth part available for FR2 sidelink can be different in different areas with overlapping FR2 base station coverage.

In mode 3, a first base station BS1 advantageously collect all BS2 FR2 usage information in its coverage area and allocate depending on user device individual positions the respective usable FR2 Sidelink bandwidth part.

The invention also proposes an extreme case for sidelink where a separation similar to Control and User Plane Separation (CUPS) will happen also on sidelinks, meaning that the FR1 sidelink is used as control channel for FR2 sidelink, which will be the data channel i.e. the user plane. CUPS is so far only known in the network. It has a user plane big pipe via PGW (Packet Data Network gateway) and control plane small pipe via MME (Mobile Management Entity).

With the invention the control is device to device, so control plane is on FR1 sidelink, small pipe but reliable, the big pipe for data is FR2 sidelink. A data transfer only makes sense and can be judged whether successful in case the related control information is reliably received including ACK/NACK or formats used for the data encoding. Hence control information is best on the most reliable sidelink of the two, i.e. in FR1, whilst data are transmitted on FR2. Information or reference signals/BCH or SS blocks present of FR2 relate advantageously to data assignment and for link estimation.

In the invention, at least the ACK NACK feedback for data on the second sidelink is transferred via the first sidelink. This means that for all the data which are transmitted via second sidelink and the general control information, also for the data transmitted on second sidelink, is transmitted via the first sidelink. ACK NACK indication is thus transmitted on sidelink in the first range of frequency also for data on the second range of frequency which can easily be done by defining an offset scheme related to the difference in timing duration.

According to an advantageous use of the second sidelink, as long as the second FR2 sidelink serves as data pipe/secondary context, the primary sidelink in FR1 will only be used for control information or minimum data to reduce the FR1 sidelink load.

This is especially advantageous for sidelink operation in case of mode 3, i.e. under base station resource control, as resources not used in FR1 can be designated to other users or to the Uu interface. So said traffic offloading to FR2 is beneficial for FR1 throughput.

The invention enables to offload the V2X standalone band C-V2X band 47 and to do related transport in unlicensed bands when cars or V2X devices are in proximity.

With the invention, the first device UE1 is adapted to broadcast or unicast its FR2/unlicensed band sidelink capabilities using a FR1 sidelink. Upon receiving an FR2 sidelink setup indication via the first range of frequency FR1 from a first user device being connected in FR1 sidelink unicast, the second user device starts to sense and scan on the second range of frequency FR2 or on indicated unlicensed band for synchronization signal emitted by said first user device in said frequency band.

For a carrier aggregation to be performed from the flow in the two sidelinks, the second device also starts broadcasting synchronization signals, such as PSS and SS information, in the second range of frequency FR2 upon receiving reference signals in the first range of frequency from the first device in proximity above a certain threshold.

With a second sidelink, settled in a second licensed or unlicensed band of frequency as long as a licensed band of the lower frequency range is involved in FR1, a carrier aggregation CA can then be performed on the sidelink as long as being in reach of a base station.

In a situation where FR2 licensed bands are used, the invention avoids to imply that the first base station covering the first range of frequency is also doing the resource mode for the licensed band in FR2 to be used as sidelink at a high granularity level, i.e. on slot or frame basis for FR2 sidelink. As the resource synchronization or shared access between Uu interface and resource used on the sidelink is done by the base station serving also the Uu interface on the same frequency to a user device, and hence using same resources as on sidelink, a coordination is needed accordingly.

Due to the timing frame duration difference between FR1 and FR2, a base station in FR1 cannot control resources in a fine granular manner as an FR2 base station would do. But an FR1 base station could indicate to a device whether the related FR2 band or a fraction of the band is rolled out in the coverage area of said FR1 base station, and if not it can be accordingly used by said devices. However in the aforementioned scenario, if there is only an unlicensed band used, the device needs to comply with the listen before talk rule or in case it is licensed and not deployed.

The invention enables, in mode 3, or in mode 4 after a session in mode 3, that the both UE to know which are the frequency areas where said FR2 is not allocated by a base station in the second range of frequency. Specifically the first base station BS knows whether a certain FR2 frequency is used by any FR2 base station in its coverage area. If not it can assign the resources freely. If such a base station in the second range of frequency exists, assignment can be done based on position of the devices or more restricted according to resource usage of the second base station acting in the second range of frequency. Here a coordination between both base stations is considered. The base stations would thus preferably be co-located, i.e. placed in a same cabinet.

With the invention, the base station FR1 receives information available when FR2 sidelink resources can be used not jeopardizing any FR2 base station in the area.

Regarding the use of mode 3 or 4, it is here noted that an air interface, Uu link connection in the first range of frequency between the network and the first user device UE1 FR1 Uu coverage has no direct relation to the coverage achieved with the upper band sidelink in second range of frequency, in particular FR2 or FR1 unlicensed. However such a link is useful for the first user device UE1 to receive continuously (mode 3) or in advance (mode 4) the information relative to the availability in second range of frequency.

For the set-up of the second sidelink, the FR1 low frequency Uu link cannot serve as a measure. Performing sensing and measurements on FR2 sidelink even when FR1 resources are available only makes sense for unicast, thus device to device traffic, when the other device is in reach.

In a future stage, carrier aggregation in first range of frequency will also work in case of mode 4, i.e. considering the automotive band 47 while the UE is autonomous and thus without base station. Combining such a CA with a unlicensed band both having a sidelink but no Uu backlink, as no network maybe involved, is rendered possible with the invention. It means that, as the second band is unlicensed, a device may need to apply the general listen before talk/sensing modes for the second band. Or, if said sensing is already applied on the first sidelink band i.e. V2X band 47, the user device may rely on that sensing results, i.e. if no other user device is detectable on 47, there is also no user device using said second sidelink.

In a further embodiment of this invention, in case that several devices are present, a resource alignment, especially the frequency band for second sidelink may be shared in frequency multiplex for data exchange on second sidelink. The devices may negotiate or indicate on the first sidelink their current or intended usage of the second sidelink, so that other devices can coordinate or refrain from using without the need of additional sensing or listen to talk on the second sidelink if the first sidelink is considered as master. Preferably such an indication to the other /surrounding devices can be made in broadcast, i.e. to everyone listening or in groupcast, i.e. to a listening group, which is less resource consuming than unicast, i.e. 1to1. By using group or broadcast, all devices involved in said scenario could be informed at once that a certain user device intends to use the second frequency range or at least a fraction of that for unicast, i.e. 1to1 data exchange.

Also in said combination, band 47 and a band from FR2 or unlicensed FR1, i.e. a band not occupied by any base station, can be aggregated. In such a case, no base station is needed if both bands are not also used for air interface Uu.

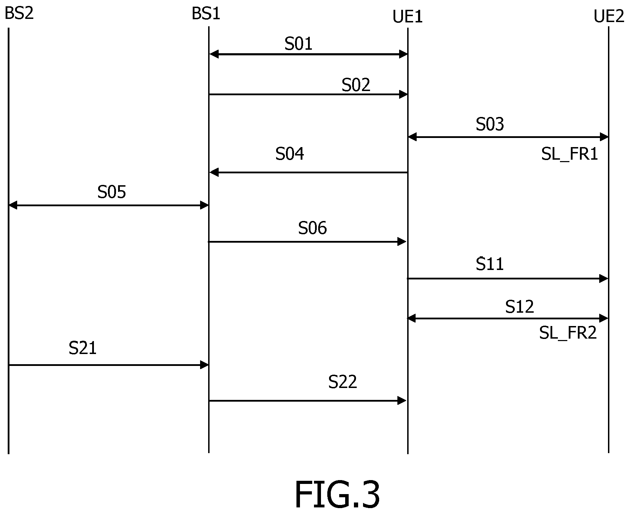

A preferred implementation of the method of the invention is illustrated in figure 3 which show a time flowchart of the method of the invention. It discloses in details how a second sidelink of the invention is set up and controlled, where the first sidelink is operated in mode 3, i.e. base station resource controlled.

In mode 3, a first user device UE1 is thus connected to a first base station BS1 using an air interface in a first range of frequency FR1 as illustrated by a first preliminary step S01.

In a second preliminary step S02, the first user device UE1 is requested by the first base station BS1 to establish a sidelink SL_FR1 in the first range of frequency FR1. In this example, the sidelink SL_FR1 is thus supervised by the first base station BS1. It is here noted that the second user device UE2 can also be connected to the first base station BS1 or to another base station acting in the first range of frequency. There is however no necessity for such a connection.

Preliminary step S03 illustrates the sidelink SL_FR1 as established between UE1 and UE2. Typically, the information between the two user devices becomes rather large and there is a need to increase the available bandwidth to transfer data.

In mode 3, then, the first user device UE1 indicates, in a step S04 to the first base station BS1 interest to setup an additional sidelink in another range of higher frequency for carrier aggregation.

In a step S05, the first base station BS1 advantageously clarifies the availability in upper ranges of frequency FR2 or upper FR1 band. Bandwidth parts as used by the second base stations BS2 are here considered. The second base station BS2 is active in bandwidth parts outside the bandwidth parts signaled as available.

In mode 3, then, the first base station BS1 then indicates general availability of bandwidth parts in the second range of frequency to the first user device UE1 in a step S06.

In case of mode 4, the first user device UE1 is made aware of the available bandwidth part in higher range of frequency using information previously received while connected to the network or using information on the geographical positions of the two user devices UE1 and UE2.

The method of the invention then proposes in its larger scope that the user device UE1 sends, in a step S11, the available bandwidth parts to the second user device UE2 using the first sidelink SL_FR1. This enables the two user devices UE1 and UE2 to agree to setup a second sidelink SL_FR2 in one of the bandwidth part signaled as available by the first user device UE1. The decision to setup the second sidelink SL_FR2 is advantageously dependent on quality of the sidelink in first range of frequency, i.e. on measurements on this first sidelink.

Advantageously, based on measurements in first range of frequency, the first UE1 then starts to activate sending of signals on available bandwidth parts in second range of frequency. The first device UE1 also indicates the second sidelink SL_FR2 activation to the second user device UE2. An activation request is here used as disclosed on figure 2. Once the second user device UE2 senses on the available bandwidth part, the two devices start sidelink carrier aggregation involving the second sidelink SL_FR2 as illustrated by step S12 on figure 3.

Depending on the different encountered situations, the two user devices UE1 and UE2 continue or stop the use of the second sidelink SL_FR2 in second range of frequency.

Where the communication is based on sidelink, relevant information, i.e. number of RX or TX available for sidelinks on FR1 and FR2 respectively and antenna gain if deviating from 0dBI (omnidirectional) need to be exchanged in addition besides power class. As a minimum solution, the TX power class and other values are only exchanged if they are deviating from an agreed default value taken of the standard values as defined for the respective frequency ranges according to 3GPP.

For reference, free path-loss calculation between two devices regardless whether Uu or SL is calculated with the following formula:

$$FSPL_{(dB)} = 20\,Log_{10}(d) + 20\,Log_{10}(F) + 20\,Log_{10}\left(\frac{4\pi}{C}\right) - G_{TX} - G_{RX}$$

where d is the distance between the antennas, F is the frequency used, $G_{TX}$ is the Gain(dBi) of the Transmitting Antenna, $G_{RX}$ is the Gain(dBi) of the Receiving Antenna, C is the speed of light in vacuum (Meters per Second).

Thus, receiving a certain signal in a sidelink in the first range of frequency at a certain level can be used to calculate the distance. Based on said distance, the FSPL for a second frequency can be calculated considering the respective RX and TX configurations. Hence it can be evaluated whether a setup attempt for a second sidelink on a higher frequency makes sense or not. Once a second sidelink is setup, the error rates and observations directly on the second sidelink can be used to evaluate whether to terminate or to suspend said sidelink i.e. due to now increased distance.

One encountered situation can be that all data are transmitted. In this case, the second sidelink SL_FR2 is suspended or terminated. It can also be that the quality of the link in first range of frequency has dropped below a given threshold. It can also be a drop of the quality in the second range of frequency below a threshold. Then the transmission of data can be pursued using the first sidelink in first range of frequency only while the second sidelink in second range of frequency is suspended.

It can also be, as further illustrated by the last steps as shown on figure 3, that the second base station BS2 indicates in a step S21 to the first base station BS1 that resources in the bandwidth parts are needed again for any base station acting in second range of frequency.

In such a case, the first base station BS1 indicates via the air interface to the first user device UE1 to stop usage of second range of frequency as a base station acting in the second range of frequency needs the resources in a step S22. Hence, the second sidelink SL_FR2 between the two user devices is momentarily suspended.

Many different situations are here possible to trigger a suspension or a termination of the second sidelink as disclosed above in the description of figure 2. Second base station BS2 in the vicinity can reconfigure BWP that was usable for second sidelink. The quality can drop below certain threshold, i.e. an in-synch or out-of-synch for 2nd sidelink, or measured reference symbols below threshold, error rate above certain threshold... In such case, the second sidelink in second range of frequency FR2 may be terminated or momentarily suspended. Signaling for suspension can be done via the second sidelink in FR2 itself or more reliable via first sidelink in FR1. The second sidelink can then be resumed based on FR1 threshold reached between the two user devices. Also the two user devices may be allowed to use entire BS2 frequency resources as long as they are not in proximity of any base station BS2 acting in second range of frequency. However once the first base station BS1 or either of the two user devices evaluates this based on positioning, the second sidelink is deactivated/suspended.

The invention thus describes new means of efficiently setting up a second sidelink which is controlled by a first sidelink in a first range of frequency, i.e. FR1 as defined in the standard. The invention is hence applicable for a device being in mode 3 or mode 4 as defined in the standard for FR1 sidelink. The second sidelink is in upper range of frequency, i.e. in the FR2 range as defined in the standard or in unlicensed range of frequency in FR1.

It is here noted that sidelink in FR2 does not exist so far. Furthermore sidelink carrier aggregation is also a new study aspect. The invention originally proposes to combine those features and to include an efficient designed in power saving mechanism based on a sidelink state machine. The sidelink evolves from "simple link" to a state controlled connection at least for the second link. These basic principles will be very useful for future evolutions of device to device (D2D) connection in general.

The invention thus proposes an FR2 sidelink setup assistance and a state machine for the second sidelink to manage related power serving means and capabilities. The state machine is controlled by an existing first sidelink, which also performs traffic steering to the second sidelink for offloading of the first sidelink in the first range of frequency and securing base station throughput when needed and applicable. With the invention, the obtained sidelink has thus build-in power saving functionality.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

**Claims**

1. Method to manage communication between a first and a second user devices, said both devices having a first sidelink preliminarily established in a first range of frequency, said method comprising the step to control the activation and deactivation of a second sidelink at a higher second range of frequency, said control using signaling on the first sidelink established with the second user device, said signaling including a resource indication relative to available frequency resources in the second range of frequency for the second sidelink to be opened.

2. Method according to claim 1, wherein the signaling further includes a quality indication relative to the quality of the first sidelink.

3. Method according to one of claims 1 and 2, wherein the signaling further includes a state indication of a state machine comprising at least the following states: activate second sidelink in frequency included in resource indication, suspend second sidelink, resume second sidelink, terminate second sidelink.

4. Method according to one of preceding claims, further comprising a step of broadcasting synchronization signals in the second range of frequency upon receiving reference signals on the first sidelink in the first range of frequency from the other user device in proximity above a certain first threshold.

5. Method according to one of the preceding claims, where the second sidelink is suspended when second sidelink signal quality or reference is below a certain second threshold and is resumed when reference signals on the first sidelink in the first range of frequency is again above the first threshold.

6. Method according to one of preceding claims, wherein the indication relative to available frequency resources is based on an evaluation of geographical positions of the two user devices relatively to local base stations acting in the second range of frequency.

7. Method according to one of preceding claims, further including the step, for the first user device, to receive the resource indication via an air interface with a first base station with which it has a connection in the first frequency range.

8. Method according to claim 7, wherein the resource indication is a frequency band or frequency chunk indicated to be usable for a second sidelink by the user device within the entire coverage area of the emitting first base station.

9. Method according to one of the preceding claims, where the first sidelink carriers at least a part of the control information for data transmitted over the second sidelink.

10. User device adapted to:

   - act in at least two ranges of frequency,
   - establish a first sidelink in a first range of frequency with a second user device,

- control the activation and deactivation of a second sidelink at a higher second range of frequency, by signaling on the first sidelink established with the second user device, said signaling including a resource indication relative to available frequency resources in the second range of frequency for the second sidelink to be opened.

**11.** User device according to claim 10, wherein the signaling further includes a quality indication relative to the quality of the first sidelink.

**12.** User device according to one of claims 10 and 11, wherein the signaling further includes a state indication of a state machine comprising at least the following states: activate second sidelink in frequency included in resource indication, suspend second sidelink, resume second sidelink, terminate second sidelink.

**13.** User device according to one of claims 10 to 12, said user device being further adapted to broadcast synchronization signals in second range of frequency upon receiving reference signals in the first range of frequency from another user device in proximity above a certain threshold.

**14.** User device according to one of claims 10 to 13, said user device comprising a geographical evaluation module adapted to perform evaluation of geographical positions of the two user devices relatively to local base stations acting in the second range of frequency.

**15.** User device according to one of claims 10 to 14, said user device being configured to receive the resource indication via an air interface with a first base station with which it has a connection in the first frequency range.

**16.** Base station adapted to:

- act in at least one first range of frequency adapted,
- to connect to a first user device in a first range of frequency and,
- to connect to a second base station acting in a second range of frequency higher than the first range of frequency,

said base station being further configured to

- gather information on bandwidth parts in the second range of frequency used by the second base station,
- determine available frequency resource in the second range of frequency,
- send resource indication relative to available frequency resources in the second range of frequency to the first user device.

**FIG.1**

**FIG.2**

FIG.3

Europäisches Patentamt
European Patent Office
Office européen des brevets

**EUROPEAN SEARCH REPORT**

Application Number

EP 22 17 4448

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/374858 A1 (VARGAS JOSE EDSON [US] ET AL) 26 November 2020 (2020-11-26) | 1-5, 9-13,16 | INV. H04W72/04 |
| Y | * figures 1, 7, 10 *<br>* page 2, paragraph 0035 - page 3, paragraph 0038 *<br>* page 5, paragraph 0055 - page 6, paragraph 0056 *<br>* page 11, paragraph 0110 - page 12, paragraph 0115 *<br>* page 15, paragraph 0144 - page 16, paragraph 0147 *<br>----- | 6-8,14, 15 | H04W4/40 |
| X | WO 2020/263570 A1 (QUALCOMM INC [US]) 30 December 2020 (2020-12-30) | 1-5, 9-13,16 | |
| A | * figures 6, 7 *<br>* page 2, paragraph 0007 - page 3, paragraph 0010 *<br>* page 24, paragraph 0092 - page 28, paragraph 0106 *<br>----- | 6-8,14, 15 | |
| Y | US 2021/297206 A1 (MANOLAKOS ALEXANDROS [US] ET AL) 23 September 2021 (2021-09-23) | 6,14 | TECHNICAL FIELDS SEARCHED (IPC) |
| A | * figure 1 *<br>* page 4, paragraph 0039 - page 5, paragraph 0052 *<br>-----<br>-/-- | 1-5, 7-13,15, 16 | H04W |

The present search report has been drawn up for all claims

| Place of search | Date of completion of the search | Examiner |
|---|---|---|
| The Hague | 29 September 2022 | Atanasovski, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EUROPEAN SEARCH REPORT

Application Number

EP 22 17 4448

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | AT&T: "Resource allocation mechanism", 3GPP DRAFT; R1-1900445 RESOURCE ALLOCATION MECHANISM-V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Taipei, Taiwan; 20190121 - 20190125 20 January 2019 (2019-01-20), XP051593358, Retrieved from the Internet: URL:http://www.3gpp.org/ftp/Meetings%5F3GP P%5FSYNC/RAN1/Docs/R1%2D1900445%2Ezip [retrieved on 2019-01-20] | 7,8,15 | |
| A | * sections: 1, 2, 3; page 1 – page 3 * * sections 4, 4.1; page 4 – page 5 * | 1-6, 9-14,16 | |

TECHNICAL FIELDS SEARCHED (IPC)

The present search report has been drawn up for all claims

| Place of search | Date of completion of the search | Examiner |
|---|---|---|
| The Hague | 29 September 2022 | Atanasovski, Igor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 17 4448

This annex lists the patent family members relating to the patent documents cited in the above-mentioned European search report.
The members are as contained in the European Patent Office EDP file on
The European Patent Office is in no way liable for these particulars which are merely given for the purpose of information.

29-09-2022

| Patent document cited in search report | Publication date | Patent family member(s) | | Publication date |
|---|---|---|---|---|
| US 2020374858 A1 | 26-11-2020 | CN | 113841462 A | 24-12-2021 |
| | | EP | 3977808 A1 | 06-04-2022 |
| | | US | 2020374858 A1 | 26-11-2020 |
| | | WO | 2020242968 A1 | 03-12-2020 |
| WO 2020263570 A1 | 30-12-2020 | CN | 114073110 A | 18-02-2022 |
| | | EP | 3991466 A1 | 04-05-2022 |
| | | US | 2020413295 A1 | 31-12-2020 |
| | | WO | 2020263570 A1 | 30-12-2020 |
| US 2021297206 A1 | 23-09-2021 | TW | 202137785 A | 01-10-2021 |
| | | US | 2021297206 A1 | 23-09-2021 |
| | | WO | 2021188208 A1 | 23-09-2021 |

EPO FORM P0459

For more details about this annex : see Official Journal of the European Patent Office, No. 12/82